# EUROPÄISCHE PATENTSCHRIFT

(11) **EP 2 360 067 B1**
(45) Veröffentlichungstag und Bekanntmachung des Hinweises auf die Patenterteilung: **11.06.2014**
(21) Anmeldenummer: 11154612.3
(22) Anmeldetag: 16.02.2011
(51) Int. Cl.: B60R 21/18

(54) **Rückhaltesystem mit einstellbarem Airbag**
Restraint system with adjustable airbag
Système de retenue avec airbag réglable

(30) Priorität: 26.03.2010 DE 102010013088; 24.02.2010 US 307595 P
(43) Veröffentlichungstag der Anmeldung: 24.08.2011
(73) Patentinhaber: Schroth Safety Products GmbH, 59757 Arnsberg (DE)
(72) Erfinder: Rathmann-Ramlow, Thomas, 59469, Ense (DE); Grüne, Ulf, 59469, Ense (DE)
(74) Vertreter: Ksoll, Peter

(56) Entgegenhaltungen:
- EP-A1- 1 101 660
- EP-A2- 1 031 472
- WO-A1-2004/069610
- DE-A1- 3 820 145
- DE-A1- 19 911 681
- DE-U1- 9 418 721
- US-A- 4 348 037
- US-A- 5 472 231
- US-A- 5 794 971
- US-A- 5 863 065

## Beschreibung

Die Erfindung betrifft ein Rückhaltesystem mit einstellbarem Airbag gemäß den Merkmalen im Oberbegriff von Patentanspruch 1.

Um die Insassensicherheit in Land~, Luft~ und Seefahrzeugen zu gewährleisten, werden jeweils geeignete Rückhaltesysteme angeordnet. Zur Reduzierung von Unfallfolgen kommt hierfür eine Kombination aus Sicherheitsgurt und Airbag zum Einsatz. Während der Sicherheitsgurt den Fahrzeuginsassen weitestgehend auf seinem Sitz fixiert, dämpft der aufgeblasene Airbag den Aufprall auf harte Fahrzeugteile. Durch die Gesamtheit der Vorrichtungen werden die im Falle einer Unfallsituation hervorgerufenen Verzögerungskräfte auf die Fahrzeuginsassen deutlich begrenzt. In der Folge werden unfallbedingte Verletzungen reduziert oder gar verhindert.

Während bei einem Aufprall des Fahrzeugs die Beschleunigung des Rumpfes durch den Sicherheitsgurt gebremst wird, werden die Extremitäten und vor allem der Kopf zunächst ungebremst beschleunigt und ausgelenkt. Zur Reduzierung der Auslenkung des Kopfes sowie zur Aufpralldämpfung werden in geschlossenen Fahrzeugen Kopfairbags eingesetzt, die im Tür-, Säulen- oder Dachbereich untergebracht sind. Um den Airbag bereits in seiner Ursprungslage möglichst nah an die zu schützenden Körperbereiche des Fahrzeuginsassen zu bringen, sind Systeme vorbekannt, welche den Airbag an dem Sicherheitsgurt anordnen.

Die US 5, 288, 104 offenbart hierzu eine dämpfende Sicherheitseinrichtung zur Nutzung in einem Fahrzeug, welche für den Einsatz an einem Sicherheitsgurt geeignet ist. Hierfür wird ein schlauchartiges Behältnis über an seinen Enden befindliche Hakenbereiche mit einem Sicherheitsgurt im Brustbereich gekoppelt. Das Behältnis beinhaltet einen gefalteten Airbag, dessen Ausdehnung durch eine Klappe in dem Behältnis ermöglicht wird. Der Airbag ist über eine elastische Rohrleitung mit einer am Fahrzeug angebrachten Aufblaseinheit verbunden. Die Aufblaseinheit beinhaltet neben einer Unfallsensorik auch einen Gasgenerator, welcher über die elastische Schlauchleitung den Airbag aufbläst.

Die US 4, 348, 037 beschreibt ein Dehnungspolster, welches mit einem Gurtbandautomaten verbindbar ist. Das Dehnungspolster wird über VELCRO-Klettbänder mit dem Gurtband verbunden. Hierfür wird eine VELCRO-Klettband Komponente an einer Unterseite des Gurtbandes durch Nähen, Kleben oder andere geeignete Mittel befestigt und eine zweite VELCRO-Klettband Komponente wird an der benachbarten Seite des Gurtes befestigt.

Die so geschaffenen Sicherheitseinrichtungen können als Standardlösung in sämtlichen Fahrzeugen mit einem integrierten Sicherheitsgurt ab Werk oder auch nachträglich verbaut werden. Die Verbindung des länglichen Behältnisses mit dem Sicherheitsgurt über die Hakenbereiche, lässt eine Längsverschieblichkeit entlang des Gurtes zu, um in seiner Lage dem jeweiligen Fahrzeuginsassen angepasst zu werden. Die vorgeschlagene Verschieblichkeit des Airbags erhöht den Komfort und die individuelle Anpassbarkeit deutlich. Allerdings kann die Verschieblichkeit während eines Unfalls zu einer unkontrollierten Verlagerung des auslösenden Airbags führen, die mitunter verheerende Folgen für den Fahrzeuginsassen haben kann. Die Klettbandvariante der US 4, 348, 037 hingegen schränkt den Komfort und die individuelle Anpassbarkeit ein. Vor diesem Hintergrund ist ersichtlich, dass die vorgeschlagene Ausführung Raum für sicherheitsrelevante Verbesserungen bietet.

Der Erfindung liegt folglich die Aufgabe zugrunde, ein Rückhaltesystem mit einer Airbageinheit aufzuzeigen, welche in kompakter Bauform im unausgelösten Zustand leicht zu verschieben ist und im ausgelösten Zustand fest mit dem Gurt verbunden ist.

Die Lösung dieser Aufgabe besteht nach der Erfindung in einem Rückhaltesystem mit einem einstellbaren Airbag gemäß den Merkmalen von Anspruch 1.

Das so gestaltete Rückhaltesystem für Insassen eines Fahrzeugs, beispielsweise eines Land-, Wasser- oder Luftfahrzeugs, weist einen Gurt und eine an dem Gurt angeordnete Airbageinheit mit einem Airbag auf. Der Gurt und die mit dem Airbag ausgestatte Airbageinheit sind zueinander verschieblich angeordnet. An dem Gurt sind Mittel zur Lagefixierung des Airbags und/oder der Airbageinheit vorgesehen.

Erfindungsgemäß weist die Airbageinheit mindestens eine daran angeordnete Lasche auf, wobei der Gurt zumindest bereichsweise durch die Lasche hindurch angeordnet ist. Die Lasche dient als bewegliche Verbindung zwischen der Airbageinheit und dem Gurt. Hierfür umgreift die Lasche den Gurt und ermöglicht so eine relative Verschieblichkeit der Airbageinheit und des Gurts zueinander. Die Lasche kann hierfür auch tunnelförmig ausgebildet sein, wobei sie sich dann beispielsweise über die gesamte Länge der Airbageinheit erstreckt. Auf diese Weise kann auch ein geschlossenes und über die gesamte Länge des Gurtes geführtes System aufgebaut werden, welches insbesondere vor dem Eintritt von Fremdkörpern oder dem ungewolltem Austritt von Teilen der Airbageinheit wie beispielsweise dem Airbag geschützt ist.

Die Mittel zur Lagefixierung sind von einer Abdeckung bedeckt und nach dem Prinzip einer Klettverbindung ausgeführt. Hierfür ist ein erstes Klettband an dem Gurt angeordnet und ein zweites Klettband an der Airbageinheit angeordnet. Erfindungsgemäß ist die Abdeckung als Gleitschicht zwischen dem ersten Klettband und dem zweiten Klettband angeordnet. Die bei direktem Kontakt aneinanderhaftenden Klettbänder der Klettverbindung sind auf diese Weise verschieblich voneinander getrennt. Durch die Anordnung des ersten Klettbandes an dem Gurt wird somit eine leichtgängige relative Verschieblichkeit zwischen der Airbageinheit und dem Gurt erreicht.

Durch die Mittel zur Lagefixierung ist der Airbag und/oder die Airbageinheit bei Auslösung des Airbags mit dem Gurt unverschieblich verbindbar. Auf diese Weise sind die Airbageinheit und der Gurt im normalen Gebrauch zueinander verschiebbar, so dass eine individuelle Anpassung der Vorrichtung an den jeweiligen Insassen erfolgen kann. Gleichzeitig ist sichergestellt, dass der Airbag bei seiner Auslösung unverschieblich in seiner Lage zum Gurt fixierbar ist. Insgesamt wird somit ein an alle Gegebenheiten und Erfordernisse individuell anpassbares Rückhaltesystem geschaffen, welches neben Flexibilität und Komfort ein Höchstmaß an Sicherheit bietet.

Die Erfindung sieht vor, dass die Mittel zur Lagefixierung von einer Abdeckung bedeckt sind. Neben dem Schutz der Mittel zur Lagefixierung, beispielsweise vor unerwünschten mechanischen Einwirkungen oder Verschmutzungen, welche die Funktionsweise beeinträchtigen oder gar zerstören könnten, wird hierdurch sichergestellt, dass die Mittel zur Lagefixierung so lange inaktiv sind, bis die Abdeckung entfernt wird.

Die Vorteile der Klettverbindung liegen in ihrer hohen Beständigkeit gegenüber Alterung und Verformung. Hinzu kommen das geringe Gewicht und die leichte Verarbeitbarkeit im Zusammenhang mit Stoffen und Textilien, welche bei derartigen Rückhaltesystemen vorherrschen. Die Funktionsweise ist selbst bei Durchnässung und je nach Ausführung auch bei hohen Temperaturen gewährleistet. Grundsätzlich können aber auch bei bestimmten Anforderungen andere form-, kraft- oder stoffschlüssige Verbindungen eingesetzt werden, die der geforderten Unverschieblichkeit entsprechen. So sind beispielsweise Klebeflächen oder rutschhemmende Oberflächenstrukturen denkbar, die an dem Gurt und/oder der Airbageinheit angeordnet sind.

Die Abdeckung ist mit der Airbageinheit verbunden und mittels des auslösenden Airbags entfernbar. Durch die Verbindung der Abdeckung mit der Airbageinheit in Kombination mit dem sich bei seiner Auslösung in Bewegung befindlichen Airbag sind zum Entfernen der Abdeckung keine zusätzlichen Auswerteeinheiten und Steuerelemente erforderlich. Der auslösende Airbag als Folge der Detektion eines Unfalles wird somit als direktes Stellglied für die Entfernung der Abdeckung genutzt, welches die Mittel zur Lagefixierung aktiviert.

Bevorzugt ist der unausgelöste Airbag im zusammengefalteten Zustand zumindest teilweise von der Abdeckung bedeckt. Die Abdeckung stellt somit mindestens eine Teileinwicklung oder Umwicklung des gefalteten Airbags dar, wobei die Abdeckung beispielsweise U-förmig um den gefalteten Airbag herum angeordnet ist. Auf diese Weise wird die Abdeckung durch den bei Auslösung expandierenden Airbag umfangsseitig verdrängt. Durch die Verbindung mit der Airbageinheit wird somit gezielt ein nicht mit der Airbageinheit verbundener Bereich der Abdeckung in kürzester Zeit aus seiner Lage bewegt und von dem Mittel zur Lagefixierung entfernt, um dieses zu aktivieren. Vorzugsweise weist die Abdeckung hierfür eine flächige und leicht biegsame Struktur auf. Neben Metall- oder Kunststoffstreifen sowie Folien können hierfür beispielsweise auch Stoffe, Textilien oder Leder sowie eine Kombination aus dem Genannten verwendet werden.

Für eine besonders kompakte Bauform weist die Airbageinheit selbst einen Gasgenerator auf. Hierdurch entfällt eine aufwändig zu verlegende Zuführung des notwendigen Gasdrucks für die Expansion des Airbags. Der in der Airbageinheit integrierte Gasgenerator steht in Verbindung mit einer einen Unfall detektierenden Sensorik. Durch das Auslösen der Sensorik wird der Gasgenerator aktiviert, wodurch das Gas über eine entsprechend gasführende Verbindung in den Airbag geleitet wird. Die notwendige Sensorik ist hierfür über eine Signalleitung mit dem Gasgenerator verbunden. Grundsätzlich sind aber auch andere Übertragungsmögfichkeiten analog der Signalleitung denkbar, beispielsweise optische oder Funkverbindungen. Generell kann für eine besonders kompakte Bauform die entsprechende Sensorik auch direkt in die Airbageinheit integriert sein.

Bevorzugt ist der Airbag im Halsbereich des Insassen angeordnet. Durch die individuell einstellbare Nähe zum Kopfbereich ist dieser dann besonders durch das aufgeführte Rückhaltesystem geschützt. Insbesondere beim Einsatz an Vier- oder Fünfpunktgurten kann die Airbageinheit eine den Nacken und den seitlichen Halsbereich umgreifende Form erhalten, um beispielsweise eine dreiseitige Abstützung des Kopfes zu gewährleisten.

In Verbindung mit einem Gurtaufroller ist der Gurt gegenüber der Airbageinheit in dessen Längsrichtung verschieblich.

Das vorgestellte Rückhaltesystem für Insassen eines Fahrzeuges bietet ein Höchstmaß an Komfort und individueller Einstellbarkeit auf den jeweiligen Fahrzeuginsassen. Trotz der gegebenen Einstellbarkeit in Bezug auf deren Verschieblichkeit ist insgesamt eine sicherheitsrelevante Lagefixierung des auslösenden Airbags in seinem bestimmungsgemäßen Bereich sichergestellt. Auch ein unerwarteter, im Expansionsbereich des Airbags befindlicher Fremdkörper, gegen den der aufgeblähte Airbag möglicherweise stößt, kann diesen im Auslösemoment durch die ihn positionierenden Mittel zur Lagefixierung nicht verschieben.

In diesem Zusammenhang zeigen sich auch die Vorteile gegenüber einem an der Fahrzeugstruktur direkt angebrachten Airbagsystem, dessen Auslösung bei einer unerwarteten Position oder Haltung des Insassen mitunter wirkungslos oder auch gefährdend sein kann. Darüber hinaus garantiert die Wahl der einzelnen Bestandteile eine wartungsfreie und alterungsunabhängige Funktionsweise.

Da das aufgeführte Rückhaltesystem unabhängig von Form und Funktion des einen Sitzplatz umgebenden Interieurs funktioniert, können so Insassen sämtlicher Fahrzeuge geschützt werden. Mit dem vorgestellten System sind auch sämtliche Sitzplätze in Fahrzeugen zur Personenbeförderung ausrüstbar, wie beispielsweise in Bussen, Bahnen und Flugzeugen. Sofern bereits Gurte vorhanden sind, können diese auf einfache Weise nachgerüstet werden. Insbesondere der Schutz von Insassen eines Fluggeräts, beispielsweise der Piloten, ist hierdurch auf eine einfache und wirkungsvolle Weise realisierbar.

Die Erfindung ist nachfolgend anhand von zwei in den Zeichnungen schematisch dargestellten Ausführungsbeispielen näher beschrieben. Es zeigen:
- Figur 1: einen mit einem erfindungsgemäßen Rückhaltesystem gesicherten Insassen;
- Figur 2: eine Airbageinheit mit einem gefalteten Airbag in geschnittener Darstellungsweise;
- Figur 3: die Airbageinheit mit expandiertem Airbag in einer Darstellungsweise gemäß Figur 2;
- Figur 4: das Rückhaltesystem in einer Variante gemäß der Darstellungsweise von Figur 1 sowie
- Figur 5: das Rückhaltesystem in einer Variante in perspektivischer Darstellungsweise.

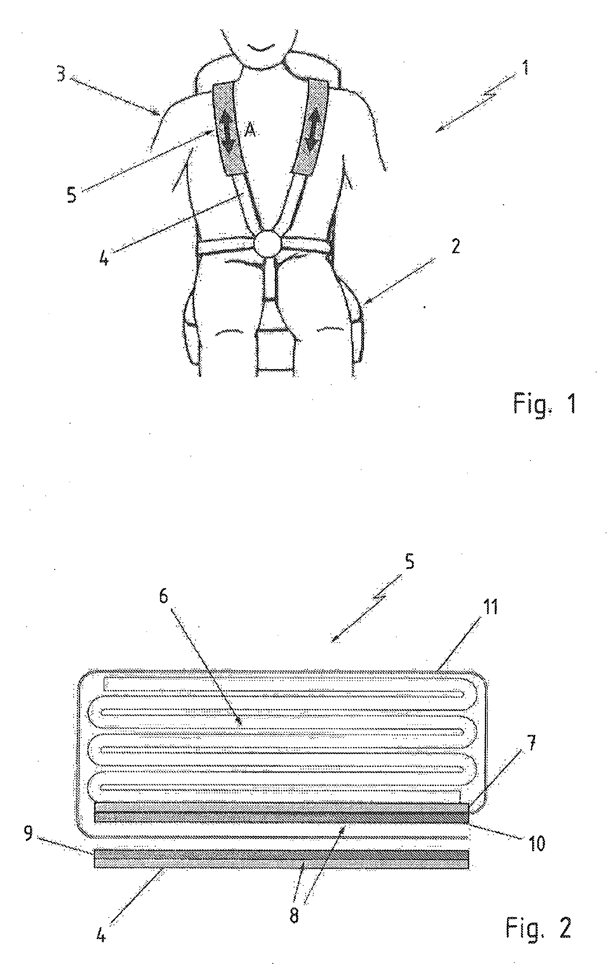

Figur 1 zeigt ein in einem hier nicht näher dargestellten Fahrzeug angeordnetes erfindungsgemäßes Rückhaltesystem 1, welches einen auf einem Sitzplatz 2 befindlichen Insassen 3 sichert. Hierzu weist das Rückhaltesystem 1 einen Gurt 4 auf, welcher als Fünfpunktgurt ausgebildet ist. Dieser verläuft jeweils beidseitig über die Schultern des Insassen 3 sowie über dessen Becken. Gemeinsam mit einem zwischen den Beinen angeordneten Teilabschnitt des Gurts 4 laufen alle Teilabschnitte des Gurts 4 im Bauchbereich des Insassen 3 zusammen und sind dort lösbar miteinander verbunden. Die jeweils gegenüberliegenden Enden der Teilabschnitte des Gurts 4 sind, in hier nicht näher dargestellter Weise, mit dem Sitz 2 oder direkt mit der Struktur des Fahrzeugs verbunden. An den im Bereich der Schultern des Insassen 3 befindlichen Teilabschnitten des Gurts 4 ist jeweils eine Airbageinheit 5 im Halsbereich des Insassen 3 angeordnet. Der Gurt 4 und die Airbageinheit 5 sind zueinander verschieblich ausgebindet, wobei die Airbageinheit 5 relativ zum Gurt 4 in dessen Längsrichtung verlagerbar ist.

Figur 2 gibt einen Einblick in die Airbageinheit 5. Die geschnittene Darstellungsweise zeigt, dass die Airbageinheit 5 einen mehrfach in sich gefalteten Airbag 6 aufweist. Eine äußere Faltenlage des Airbags 6 ist flächig mit einem Trägergurt 7 verbunden. Auf einer der flächigen Verbindung zwischen dem Airbag 6 und dem Trägergurt 7 gegenüberliegenden Seite des Tragergurts 7 verläuft parallel hierzu der Gurt 4. Zwischen dem Gurt 4 und dem Trägergurt 7 sind Mittel zur Lagefixierung 8 des Airbags 6 angeordnet. Die Mittel zur Lagefixierung 8 sind nach dem Prinzip einer Klettverbindung ausgeführt, wobei ein erster Klettband 9 flächig an dem Gurt 4 angeordnet ist und zweites Klettband 10 auf der dem Airbag 6 gegenüberliegenden Seite des Trägergurts 7 ebenfalls flächig angeordnet ist. Auf einer Längsseite der Airbageinheit 5 ist eine Abdeckung 11 zwischen dem Trägergurt 7 und dem zweiten Klettband 10 angeordnet und mit diesen verbunden. Die Abdeckung 11 verläuft hierbei quer zur Längsrichtung der Airbageinheit 5 über den gefalteten Airbag 6 und deckt diesen an seinen Längsseiten sowie an einer dem Trägergurt 7 gegenüberliegenden Seite des gefalteten Airbags 6 ab. Das freie Ende der Abdeckung 11 verläuft nach seiner Umhüllung des gefalteten Airbags 6 über die gesamte Breite des ersten und zweiten Klettbands 9, 10 und deckt diese jeweils ab. Durch den Verlauf der Abdeckung 11 zwischen dem ersten und zweiten Klettband 9, 10 sind diese als Mittel zur Lagerfixierung 8 des Airbags 6 an dem Gurt 4 voneinander getrennt. Die Abdeckung 11 dient hierbei als Gleitschicht zwischen dem ersten und zweiten Klettband 9, 10.

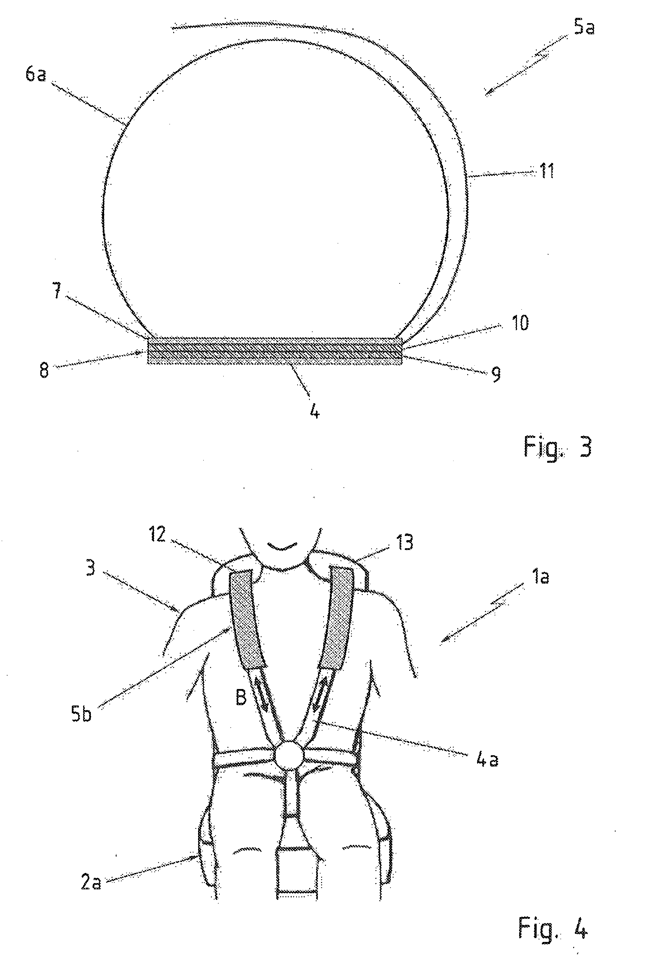

Figur 3 zeigt eine ausgelöste Airbageinheit 5a, bei der ein expandierter Airbag 6a einen deutlichen Volumenzuwachs gegenüber dem in Figur 2 dargestellten Airbag 6 in gefaltetem Zustand aufweist. Die Abdeckung 11 ist hierbei aus ihrer Lage zwischen dem ersten und zweiten Klettband 9,10 entfernt, wodurch diese als Klettverbindung einen flächigen Formschluss aufweisen.

Figur 4 zeigt ein Rückhaltesystem 1a, welches eine Variante des bereits in Figur 1 aufgezeigten Rückhaltesystems 1 darstellt. Das Rückhaltesystem 1a weist hierbei einen analog dem Gurt 4 in Figur 1 dargestellten Aufbau als Fünfpunktgurt auf, der in seinen Teilabschnitten im Bereich der Schultern nah des Halsbereichs des Insassen 3 jeweils eine Airbageinheit 5b aufweist. Die Airbageinheit 5b ist jeweils mit ihrem über den Schultern des Insassen 3 liegenden Ende 12 mit einer Rückenlehne 13 eines Sitzes 2a verbunden. Der Gurt 4a verläuft hierbei innerhalb der Airbageinheit 5b und ist in Längsrichtung B verschieblich.

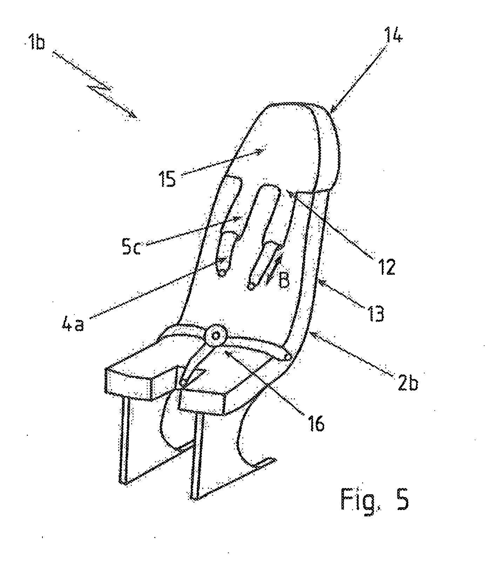

Figur 5 zeigt eine weitere Variante eines Rückhaltesystems 1b in perspektivischer Darstellungsweise. Das Rückhaltesystem 1b weist ebenfalls einen analog dem Gurt 4, 4a in den Figuren 1 und 4 dargestellten Aufbau als Fünfpunktgurt auf, der in seinen Teilabschnitten im Bereich der Schultern nahe des Halsbereichs des hier nicht näher dargestellten Insassen 3 jeweils eine Airbageinheit 5c aufweist. Die Airbageinheit 5c ist jeweils mit ihrem über den Schultern des nicht näher dargestellten Insassen 3 liegenden Ende 12 mit einer Kopfstütze 14 eines Sitzes 2b verbunden. Analog der Figur 4 verläuft der Gurt 4a auch hierbei innerhalb der Airbageinheit 5c und ist in Längsrichtung B verschieblich. Innerhalb der Kopfstütze 14 ist ein nicht näher dargestellter Gasgenerator angeordnet. Des Weiteren weist die Kopfstütze 14 zum nicht näher dargestellten Kopf des Insassen 3 hin, einen Aufprallairbag 15 auf, welcher zusammen mit der Airbageinheit 5c oder getrennt von der Airbageinheit 5c auslösbar ist. Ein Beckengurtbereich 16 entspricht zusammen mit dem Gurt 4a in Kombination mit nicht näher dargestellten Gurtautomaten dem typischen Aufbau eines Gurtsystems eines solchen Sitzes 2b.

In der Praxis wird ein erfindungsgemäßes Rückhaltesystem 1, 1a, 1b mit einem Sitz 2, 2a oder mit der Kopfstütze 14 des Sitzes 2b innerhalb eines Fahrzeugs kombiniert. Der Sitz 2, 2a, 2b wir durch einen Insassen 3 belegt, welcher einen Gurt 4, 4a des Rückhaltesystems 1, 1a, 1b anlegt, der im Schulterbereich des Insassen 3 jeweils eine Airbageinheit 5, 5a - 5c aufweist. Eine für den Insassen 3 des Fahrzeugs kritische Unfallsituation wird über eine entsprechende Sensorik detektiert, welche die dabei auftretenden Verzögerungswerte registriert und bei Überschreitung eines zuvor eingestellten Schwellenwerts einen Gasgenerator auslöst.

Der Gasgenerator ist über eine entsprechend gasführende Leitung mit einem innerhalb der Airbageinheit 5, 5b angeordneten gefalteten Airbag 6 verbunden. Der von dem Gasgenerator erzeugte Gasdruck wird über die Gasleitung in den gefalteten Airbag 6 geleitet, woraufhin dieser innerhalb kürzester Zeit expandiert. Eine um den Airbag 6 herum angeordnete Abdeckung 11, welche eine Verbindung zu der Airbageinheit 5, 5a, 5b aufweist, wird hierbei aus ihrer ursprünglichen Lage bewegt. Der ausgelöste Airbag 6 vergrößert seinen eingewickelten Umfang, so dass seine Ausdehnung den ihn umgebenen Teil der Abdeckung 11 verdrängt.

Ein freies Ende der Abdeckung 11, welches zwischen einem ersten Klettband 9 und einem zweiten Klettband 10 verläuft und diese abdeckt, wird hierbei aus dieser Lage entfernt. Die aus dem ersten und zweiten Klettband 9, 10 bestehenden Mittel zur Lagefixierung 8 treten hierdurch in flächigen Kontakt. Der durch die starke Verzögerung des Fahrzeugs beschleunigte Körper des Insassen 3 wird hierbei entgegen der Kraftrichtung des expandierten Airbags 6a beschleunigt, woraufhin die Mittel zur Lagefixierung 8 in formschlüssigen Kontakt zueinander treten. Die so entstehende geschlossene Klettverbindung fixiert exakt die Lage des Gurts 4, 4a und der Airbageinheit 5a, 5b zueinander, welche hierdurch unverschieblich in Längsrichtung A, B zueinander fixiert sind.

Sofern die Airbageinheit 5c mit der Kopfstütze 14 und dem darin enthaltenen Aufprallairbag 15 kombiniert ist, können sowohl Airbageinheit 5c, als auch der Aufprallairbag 15 entweder zeitgleich oder versetzt zueinander ausgelöst werden. Die Airbageinheit 5c und der Aufprallairbag 15 werden dabei entweder von nur einem oder von getrennt voneinander arbeitenden Gasgeneratoren expandiert.

In vorteilhafter Weise wird beispielsweise bei einem Frontalaufprall des Fahrzeugs zunächst die Airbageinheit 5c ausgelöst, um den ausgelenkten Kopf des Insassen 3 abzubremsen. Im Anschluss wird der Aufprallairbag 15 ausgelöst, um den nunmehr zurückschlagenden Kopf des Insassen 3 zu bremsen.

### Bezugszeichen:

- 1 -: Rückhaltesystem
- 1a-: Rückhaltesystem
- 1b-: Rückhaltesystem
- 2-: Sitz
- 2a-: Sitz
- 2b -: Sitz
- 3-: Insasse
- 4-: Gurt
- 4a-: Gurt
- 5-: Airbageinheit, geschlossen
- 5a -: Airbageinheit, ausgelöst
- 5b -: Airbageinheit, geschlossen
- 5c-: Airbageinheit, geschlossen
- 6-: Airbag, gefaltet
- 6a -: Airbag, ausgelöst
- 7 -: Trägergurt
- 8-: Mitten zur Lagefixierung von 6, 6a
- 9-: erstes Klettband von 8
- 10-: zweites Klettband von 8
- 11 -: Abdeckung
- 12 -: Ende von 5b, 5c
- 13-: Rückenlehne von 2a, 2b
- 14-: Kopfstütze von 2b
- 15-: Aufprallairbag von 14
- 16-: Beckengurtbereich von 1 b
- A-: Längsrichtung von 5, 5a
- B-: Längsrichtung von 4a

## Patentansprüche

1. Rückhaltesystem für Insassen eines Fahrzeugs, weiches einen Gurt (4, 4a) und eine an dem Gurt (4, 4a) angeordnete Airbageinheit (5, 5a - 5c) mit einem Airbag (6, 6a) aufweist, wobei der Gurt (4, 4a) und die Airbageinheit (5, 5a - 5c) zueinander verschieblich sind und Mittel zur Lagefixierung (8) des Airbags (6, 6a) an dem Gurt (4, 4a) vorgesehen sind, durch welche der Airbag (6, 6a) bei Auslösung mit dem Gurt (4, 4a) unverschieblich verbindbar ist, wobei die Mittel zur Lagefixierung (8) nach dem Prinzip einer Klettverbindung ausgeführt sind, wobei ein erstes Klettband (9) an dem Gurt (4, 4a) angeordnet ist und ein zweites Klettband (10) an der Airbageinheit (5, 5a - 5c) angeordnet ist, **dadurch gekennzeichnet, dass** die Airbageinheit (5, 5a - 5c) eine Lasche aufweist und der Gurt (4, 4a) zumindest bereichsweise durch die Lasche hindurch angeordnet ist, wobei die Mittel zur Lagefixierung (8) von einer Abdeckung (11) bedeckt sind und die Abdeckung (11) als Gleitschicht zwischen dem ersten Klettband (9) und dem zweiten Klettband (10) angeordnet ist, wobei die Abdeckung (11) mit der Airbageinheit (5, 5a - 5c) verbunden und mittels des auslösenden Airbags (6a) entfernbar ist.

2. Rückhaltesystem nach Anspruch 1, **dadurch gekennzeichnet, dass** der unausgelöste Airbag (6) zumindest teilweise von der Abdeckung (11) bedeckt ist.

3. Rückhaltesystem nach Anspruch 1 oder 2, **dadurch gekennzeichnet, dass** die Airbageinheit (5, 5a - 5c) einen Gasgenerator aufweist.

4. Rückhaltesystem nach einem der Ansprüche 1 bis 3, **dadurch gekennzeichnet, dass** der Airbag (6, 6a) im Halsbereich des Insassen angeordnet ist.

## Claims

1. Restraint system for occupants of a vehicle, which comprises a belt (4, 4a) and an airbag unit (5, 5a - 5c) with an airbag (6, 6a) arranged on the belt (4, 4a), the belt (4, 4a) and the airbag unit (5, 5a - 5c) being movable relative to one another and means (8) being provided for securing the position of the airbag (6, 6a) on the belt (4, 4a), by means of which the airbag (6, 6a) can be connected to the belt (4, 4a) so as to be immovable when the airbag is deployed, the position securing means (8) being configured on the principle of a hook-and-loop fastening, a first hook-and-loop fastening strip (9) being arranged on the belt (4, 4a) and a second hook-and-loop fastening strip (10) being arranged on the airbag unit (5, 5a - 5c), **characterised in that** the airbag unit (5, 5a - 5c) comprises a flap and the belt (4, 4a) is arranged so as to pass at least partially through the flap, the position securing means (8) being covered by a cover (11) and the cover (11) being provided as a sliding layer between the first hook-and-loop fastening strip (9) and the second hook-and-loop fastening strip (10), the cover (11) being connected to the airbag unit (5, 5a - 5c) and adapted to be moved away by the deploying airbag (6a).

2. Restraint system according to claim 1, **characterised in that** the undeployed airbag (6) is at least partly covered by the cover (11).

3. Restraint system according to claim 1 or 2, **characterised in that** the airbag unit (5, 5a - 5c) comprises a gas generator.

4. Restraint system according to one of claims 1 to 3, **characterised in that** the airbag (6, 6a) is arranged in the region of the occupant's neck.

## Revendications

1. Système de retenue pour occupants d'un véhicule, lequel système comporte une ceinture (4, 4a) et un module d'airbag (5, 5a à 5c) agencé sur la ceinture (4, 4a) avec un airbag (6, 6a), la ceinture (4, 4a) et le module d'airbag (5, 5a à 5c) pouvant être déplacés l'un par rapport à l'autre et des moyens (8) étant prévus pour fixer la position de l'airbag (6, 6a) sur la ceinture (4, 4a), moyens par lesquels l'airbag (6, 6a) lors du déclenchement peut être lié à la ceinture (4, 4a) de manière à ne pas se déplacer, les moyens (8) pour fixer la position étant réalisés selon le principe d'une liaison autoagrippante, une première bande agrippante (9) étant agencée sur la ceinture (4, 4a) et une deuxième bande agrippante (10) étant agencée sur le module d'airbag (5, 5a à 5c), **caractérisé en ce que** le module d'airbag (5, 5a à 5c) comporte une languette et **en ce que** la ceinture (4, 4a) est agencée au moins en partie à travers la languette, les moyens (8) pour fixer la position étant recouverts par une protection (11) et la protection (11) étant agencée sous forme de surface de glissement entre la première bande agrippante (9) et la deuxième bande agrippante (10), la protection (11) étant liée au module d'airbag (5, 5a à 5c) et pouvant être retirée au moyen de l'airbag (6a) se déclenchant.

2. Système de retenue selon la revendication 1, **caractérisé en ce que** l'airbag (6) non déclenché est recouvert au moins en partie par la protection (11).

3. Système de retenue selon la revendication 1 ou 2, **caractérisé en ce que** le module d'airbag (5, 5a à 5c) comporte un générateur de gaz.

4. Système de retenue selon l'une des revendications 1 à 3, **caractérisé en ce que** l'airbag (6, 6a) est agencé au niveau du cou de l'occupant.
